Europäisches Patentamt

European Patent Office

Office européen des brevets

(19)

(11) Veröffentlichungsnummer: **0 054 767**
**B1**

# (12) EUROPÄISCHE PATENTSCHRIFT

(45) Veröffentlichungstag der Patentschrift:
11.09.85

(21) Anmeldenummer: 81110040.3

(22) Anmeldetag: 01.12.81

(51) Int. Cl.⁴: **C 08 J 9/42, C 09 K 21/06**

(54) Flammschutzmittel und schwerentflammbarer Polyurethanschaum sowie Verfahren zu dessen Herstellung.

(30) Priorität: 18.12.80 DE 3047823

(43) Veröffentlichungstag der Anmeldung:
30.06.82 Patentblatt 82/26

(45) Bekanntmachung des Hinweises auf die Patenterteilung:
11.09.85 Patentblatt 85/37

(84) Benannte Vertragsstaaten:
AT CH DE FR GB IT LI SE

(56) Entgegenhaltungen:
EP - A - 0 002 458
EP - A - 0 011 211

JOURNAL OF CELLULAR PLASTICS, Band 15, Nr. 3, Mai-Juni 1979, Seiten 163-179 Westport, G.B. P.V. BONSIGNORE: "Flame retardant flexible polyurethane foam by post-treatment with alumina trihydratr/latex binder dispersion systems"

(73) Patentinhaber: Odenwald Chemie GmbH, Postfach 140, D-6901 Schönau/Heidelberg (DE)

(72) Erfinder: al-Tabaqchali, Manhal,
Kurt-Lindemann-Strasse 25, D-6903 Neckargemünd (DE)
Erfinder: Wesch, Ludwig, Prof. Dr., Görrestrasse 54, D-6900 Heidelberg (DE)
Erfinder: Weiss, Edgar, Am Stangenberg 37, D-6901 Neckarsteinach (DE)

(74) Vertreter: Müller, Hans-Jürgen, Dipl.-Ing. et al, Müller, Schupfner & Gauger
Lucile-Grahn-Strasse 38 Postfach 80 13 69, D-8000 München 80 (DE)

## Beschreibung

Die Erfindung betrifft den Brand- bzw. Flammschutz und bezieht sich auf ein zur Behandlung von entflammbaren Gegenständen dienendes Flammschutzmittel sowie auf ein Verfahren zur Herstellung eines schwerentflammbaren Polyurethanschaumstoffs auf Polyätherbasis sowie einen solchen Gegenstand.

Poröse Gegenstände, insbesondere Schaumstoffe, zeichnen sich neben einer Reihe von Vorteilen, die sie besonders als Baustoffe, aber auch als Füllstoffe geeignet machen, vor allem auch durch den Nachteil aus, daß sie sich beim Auftreten von Bränden leicht entzünden oder sich physikalisch bzw. chemisch so zersetzen, daß sie zu Sekundärbränden führen können. Hiervon betroffen sind insbesondere Schaumstoffe auf der Basis von Polyurethan, Kautschuk, PVC und Polystyrol sowie deren Copolimerisaten.

Um die Brandschutzgefahr, Nachglimmgefahr oder auch Nachzündgefahr zu vermindern, ist es bereits bekannt (DE-OS 2 754 313 und 2 856 081) Polychloroprenlatex, Aluminiumhydroxid, Zink- und Magnesiumoxid, Alkylphenol und Alkylsulfonat (als Netzmittel), Antimontrioxid sowie Pentabromtoluol einzuführen. Dabei wird der Carboxylgruppen aufweisende elastomere Polychloroprenlatex mit Zink- und Magnesiumoxyd u. a. Netzmitteln auf den PU-Schaumstoff durch Sprühen, Gießen, Rakeln, Tauchen, Tränken etc. aufgebracht und vernetzt. Auch andere vernetzbare Elastomere, wie Polybutadien, Polyisopren und ABS (Acrylnitril-Butadien-Styrol)-Polymerisate, finden dabei Anwendung. Die Lebensdauer insbesondere bei Lichteinfall, das Nachglimmverhalten und die flammwidrig ausgerüstete Schichtdicke des Schaumstoffes befriedigten jedoch noch nicht. So konnte bisher nicht befriedigend verhindert werden, daß im Brandfall ein nur unvollständig verkohltes Gerüst des Schaummaterials zurückbleibt, das noch weiter schwelte und nachglimmte und irgendwann einen neuen Brandherd bildete.

Es ist daher auch schon bekannt (DE-OS 2 811 951, 2 512 345; DE-AS 1 494 929, 1 494 899, 2 112 005; AT-PS 351 773 und GB-PS 1 066 330), das Flammschutzmittel schon vor der Schaumstoffherstellung oder Herstellung von Kunststoffschichten, -platten und dergleichen -gegenständen mit den Ausgangsstoffen zu mischen und möglichst als Reaktionspartner in den endgültigen Kunststoff als integralen Bestandteil zu integrieren. Abgesehen von fertigungstechnischen Problemen ergeben sich jedoch bei Schaumstoffen nachteilige mechanische Eigenschaften.

Der Erfindung liegt daher die Aufgabe zugrunde, ein auch nachträglich auf entflammbare Gegenstände aufbringbares Flammschutzmittel zu schaffen, das trotz verbesserter Flammschutzwirkung die mechanischen Eigenschaften der behandelten Körper, darunter insbesondere offenzelliger Schaumstoffe, nicht wesentlich beeinträchtigt.

Die verschiedenen Ausbildungen der Erfindung sind in den Patentansprüchen gekennzeichnet.

Das Flammschutzmittel weist gemäß der Erfindung als Schwefelverbindung eine flammschutzverbessernde Verbindung auf, die mindestens eine Sulfogruppe und/oder Sulfoniumionen enthält, und zwar in einem Anteil zwischen 7,5 und 30% — mit Ausnahme von Alcylsulfonaten. Gemäß einer Ausbildung der Erfindung weist die als Flammschutzmittel dienende Tränkmittel-Dispersion etwa folgende Zusammensetzung auf:

| | |
|---|---|
| 29—50% | Aluminiumtrihydrat |
| 27—32% | Wasser |
| 10—22% | Acrylsäureester-Polymerisat oder -Copolymerisat |
| 7,5—15% | Ammoniumsalz der Aminosulfonsäure |
| bis zu 11% | Antiomontrioxyd |
| bis zu 5% | Titandioxyd |
| bis zu 0,5% | Entschäumungsmittel |
| bis zu 0,5% | Pigmente |

Dieses unter Verwendung von in einem organischen Bindemittel gebundenem Aluminiumtrihydrat hergestellte Flammschutzmittel dient als Tränkmittel für einen insbesondere schwer entflammbaren Polyurethanschaum auf Polyätherbasis.

Gemäß einer anderen Ausbildung der Erfindung wird solcher schwer entflammbarer Polyurethanschaum im wesentlichen offenzellig mit einem Raumgewicht zwischen etwa 10 und 50 kg/m$^3$ ausgebildet und mit dem Flammschutzmittel getränkt und zwar derart, daß der die Zellwände der offenen Zellen der porösen Schaumstruktur bedeckende Überzug eine Sulfoverbindung in einem Anteil zwischen 7,5 und 30% des Überzugs in dessen fließfähigen Tränkmittelzustand vor dem Aufbringen aufweist. Dabei ist es besonders zweckmäßig, wenn der Überzug einen Anteil von 12—22% (bezogen auf das Gewicht des Flammschutzmittels in dessen fließfähigen Tränkmittelzustand vor dem Aufbringen) eines Polymeren oder Copolymeren auf der Basis von Acrylsäureester aufweist.

Besonders bevorzugt wird ein solcher Polyurethanschaum, der durch die Kombination mit einer Deckschicht gekennzeichnet ist, welche aus einer wäßrigen Epoxydharzemulsion folgender Ausgangszusammensetzung auf der Schaumstruktur aufgetragen ist:
wäßrige Epoxydharzemulsion bestehend aus in Wasser emulgierbarem, hydrophilem Epoxydharz mit einem Härter auf der Basis von Polyaminen, Polycarbonsäureanhydrid, Polyamidoaminen und/oder Dicyandiamid, sowie mit endotherm reagierenden, schaumbildenden, gasabgebenden und/oder kettenabbrechenden Zusätzen und/oder Füllstoffen.

Ein bevorzugtes Verfahren zur Herstellung eines solchen schwer entflammbaren Polyätherschaumstoffs, bei dem der Schaumstoff mit einem Flammschutzmittel getränkt und anschließend getrocknet wird, besteht darin, daß der Schaumstoff so stark mit dem Flammschutzmittel getränkt wird, daß das Raumgewicht des Schaumstoffs nach dem Trocknen mindestens 500% des ursprünglichen Raumgewichtes vor dem Tränken aufweist.

Die bevorzugte Sulfonium-Mehrfachverbindung hat im Unterschied zur Netzmittelwirkung beim Stand der Technik die Aufgabe, wirksam an der Flammschutzwirkung beizutragen. So kann es sich bei den Sulfoniumionen auch um Sulfonium-Zwitter-Ionen handeln. Besonders vorteilhaft ist eine Kombination mit einer Ammoniumverbindung insbesondere einem Ammoniumsalz einer Sulfonsäure, und zwar mit einem Anteil von 12% am Tränkmittel.

Mit Hilfe erfindungsgemäßer Flammschutzmittel können insbesondere offenzellige Polyurethanschäume (vor allem auf Polyätherbasis) flammwidrig gemacht werden. Das Brand- bzw. Flammschutzmittel überzieht vor allem die nach außen offenen Oberflächenteile insbesondere auch in den offenzelligen Poren und verleiht dem Schaumstoff einen hohen Feuer-, Brand- und/oder Flammwiderstand. Außerdem wurde festgestellt, daß der mit dem Mittel getränkte Schaumstoff bei hohen Temperaturen, wie dies bei Bränden der Fall ist, in kleine Teilchen bzw. Mikropartikel zerfällt, so daß ein Wiederentzünden oder Nachglimmen nicht möglich ist.

Dieser Überzug ist bei allen Arten insbesondere poriger bzw. porösen Körper, aber auch bei Folien möglich, die sogar nach dem Überziehen mit dem Flammschutzmittel in Form von Laminaten kombiniert werden können.

Überraschenderweise hat sich gezeigt, daß das erfindungsgemäße Flammschutzmittel eine gute Tränkung von Schaumstoffgegenständen mit bis zu etwa 50 mm Schichtdicke ermöglicht, welche einen viel besseren Schutz als nur bis zu 20 mm tief getränkte Polyätherschäume bieten. Zu diesem Zweck wird bevorzugt eine wäßrige Lösung oder Dispersion, insbesondere Emulsion, eines organischen Bindemittels verwendet. Neben Acrylaten empfehlen sich Polymerisate auf Basis Vinylacetat und wäßrige Epoxidharzemulsionen ebenso wie Copolymerisate von Acrylsäureestern.

Selbst bei Anwendung der Doppeltränkung, die eine Aufnahme von so viel Flammschutzmittel bietet, daß sich das Raumgewicht des Schaumes von etwa 20 kg/m$^3$ auf das 6,5fache erhöht, werden die mechanischen, für den Schaumstoffcharakter maßgebenden Eigenschaften nicht wesentlich beeinträchtigt. So bleibt die Rückstellkraft groß und nimmt die Risse- oder gar Pulverisieranfälligkeit bei dynamischer Beanspruchung selbst nach längerer UV-Bestrahlung nicht zu. Vermutlich ist dies ein Verdienst auch bei der Auswahl des Bindemittels, insbesondere der Acrylate, in einem besonderen Anteil am Flammschutzmittel. Im Gegensatz zur Verwendung von mit Polychloropren oder dergleichen Latex versehenen Schaumstoffen ist die Alterungsbeständigkeit von mit Acrylaten getränkten Polyurethanschaumstoffen wesentlich besser, obwohl wenig Pigmente bzw. andere Alterungsschutzmittel verwendet werden; sie bleiben viel länger elastisch. Dies ist vor allem für solche Schaumstoffe wichtig, die zu Polsterzwecken, wie für Sitzkissen, Matratzen, Fahrzeugsitze, aber auch zur stoßdämpfenden Polsterung von Fahrzeugteilen verwendet werden.

Sofern mit dem Flammschutzmittel versehene Schaumstoffe als schnell- und/oder wärmedämmende Wandteile von Gebäuden, Fahrzeugen und dergleichen verwendet werden, empfiehlt es sich nach einer weiteren Ausbildung der Erfindung, den Schaumstoff mindestens an einer Seite mit einer zusätzlichen schwerentflammbaren Schutzschicht zu überziehen. Diese kann aufgespritzt werden und findet in den offenen Zellen der Außenseite des Schaumstoffes eine gute Verankerung. Sie wird vorzugsweise gebildet aus einer wäßrigen Epoxidharzemulsion, die mit Härtern und Zusätzen bzw. Füllmitteln versehen sind, welche bei hohen Temperaturen endotherm reagieren, Schaum bilden, Gas abgeben und/oder Molekülketten abbrechen.

Bei der Durchführung des erfindungsgemäßen Verfahrens ist es zweckmäßig, wenn

1. der Schaumstoff vollständig durchtränkt wird,
2. die Oberflächenspannungen und pH-Werte des Tränkbades derart eingestellt werden, daß das Flammschutzmittel, d. h. das Tränkbad, in gleichmäßiger Schichtdicke gut am Schaumstoff anhaftet und die Haftfestigkeit auch bei kompressiver Beanspruchung oder dynamischer Belastung so dauerhaft ist, daß im wesentlichen kein Abblättern stattfindet, und
2. die Härte des Schaumstoffes nicht wesentlich beeinflußt wird.

Im folgenden werden Beispiele für besonders bevorzugte Tränkbäder bzw. Flammschutzmittel angegeben. (Die Prozentangaben sind Gewichtsprozente des Flammschutz- bzw. Tränkmittels.) Das Aluminiumtrihydrat ist im Flammschutzmittel in einem Anteil von bis zu 50% und die Schwefelverbindung in einem Anteil zwischen 7,5 und 30% vorhanden.

## Beispiel 1

| | |
|---|---|
| Acrylat KA 8158   55%ig | 20% |
| Wasser | 31,2% |
| Martinal® V 100 — C | 37,5% |
| Feliderm® DR | 8% |
| Antimontrioxyd | 2% |
| Helio-echt® | 0,3% |
| Baysilon®-Entschäumer E | 0,4% |
| Ammoniak 25%ig | 0,2% |
| Mirox® AM   25%ig | 0,4% |

Das Tränkbad wird so eingestellt , daß folgende Werte eingehalten werden:

| | |
|---|---|
| Viscosität: | 200 mPa |
| Feststoffgehalt: | 58—59% |
| pH-Wert: | 7—8 |
| spez. Gew.: | 1,416 |

Acrylat KA 8158 ist ein Acrylsäureestermischpolymerisat der Firma Bayer AG mit einem Polymergehalt von 55%. An seiner Stelle kann auch Acronal® (ein Plyacrylester der BASF) oder eine andere Lösung oder wäßrige Dispersion eines organischen Bindemittels, wie Mowilith® DC 20 F (PVAC der Firma Hoechst) verwendet werden.

Martinal® V 100 — C ist ein Aluminiumtrihydrat der Martinswerke, Köln. Stattdessen kann auch Giludral® AGL 73 (der Firma Giuliniwerke, Ludwigshafen) oder APYRAL® verwendet werden.

Feliderm® DR ist ein Ammoniumsalz der amino-Imido-Sulfonsäure der Hoechst AG.

Das Antimontrioxyd sollte ein spez. Gewicht von 5,2 aufweisen.

Baysilon® ist eine Silikonsäureemulsion, z. B. Polysiloxanmethyläther.

Mirox® AM ist eine Acrylsäure mit Acrylester der Chem. Fabrik Stockhausen, Krefeld, und dient zur Verbesserung der Dispersion.

Ein Polyätherschaum mit einem Raumgewicht von ca. 20 kg/m³ wird in ein dem Beispiel 1 entsprechendes Tränkbad eingebracht und untergetaucht, um eine möglichst gute Durchtränkung des offenzelligen Schaumstoffes zu erzielen. Nach der Tränkung weist der Schaum ein Raumgewicht von etwa 100 kg/m³ auf.

Anschließend wird im Warmluftstrom getrocknet. Besonders bevorzugt ist jedoch ein Trocknungsverfahren unter Anwendung von Hochfrequenz im Mikrowellenofen. Hierbei ist überraschend, daß im Gegensatz zu bereits vorgeschlagenen getränkten Schaumstoffen der gemäß obigem Beispiel 1 verwendete und getränkte Schaumstoff nach der Trocknung im Mikrowellenfeld praktisch sämtliche seiner Eigenschaften voll beibehalten hat, sich jedoch durch hervorragende »Brandsicherheit« auszeichnet.

Es wurden folgende Eigenschaften festgestellt:

| | |
|---|---|
| Temeraturbeständigkeit: | beständig zwischen —50 — +150°C |
| Geruch: | kein Geruch |
| Farbe: | alle Farben |
| Feststoff: | 58—59% |
| HCl-Abspaltung: | keine |
| Einstellung des Weichheitsgrades: | durch Änderung des Bindemittels |
| UV- und IR-Beständigkeit: | beständig |
| Rauchabgase bei Brand: | gering |
| Glühung: | verschwindet bei Entfernen der Flamme |
| Waschfest: | sehr gut |
| Rohdichte: | 18 ± 2 kg/m³ |
| Stauchwert nach DIN 53571: | 40% |
| Zugfestigkeit nach DIN 53571: | 70 kPa |
| Bruchdehnung: | mindestens 180% |
| Druckverformungsrest: | 10% |
| Eindruck- bzw. Stauchhärte nach DIN 53576 unter 40% Verformung: | 2,3 kPa |

Beispiel 2

| | |
|---|---|
| Acrylat KA 8158 55%ig | 20% |
| Wasser | 31,3% |
| Martinal® V 100 – C | 32,6% |
| Feliderm® K | 8% |
| Bromkal® 73-6 DC | 2% |
| Antimontrioxyd | 5% |
| Helio-echt® gelb | 0,3% |
| Baysilon®-Entschäumer E | 0,2% |
| Ammoniak 25%ig | 0,2% |
| Mirox® AM 25%ig | 0,4% |

Bromkal® 73-6 DC ist ein Produkt der Chemischen Fabrik Kalk, Köln, auf der Basis von Pentabromtoluol mit ca. 73% Bromgehalt. An seiner Stelle kann Bromkal® 48—4 BA oder 1,2-Bis-(2,4,6-Tribromphenoxy)-äthan der Velsicol Chemical Corp., Chicago, verwendet werden.

Feliderm® K ist ein Ammoniumsalz der Aminosulfonsäure.

Zur weiteren Verbesserung der Flammschutzwirkung in einem Feuerbereich mit hoher Temperatur ist es zweckmäßig, den bereits beispielsweise nach Beispiel 1 vorgetränkten Schaumstoff mit einer zweiten Schicht im Tränkverfahren zu überziehen; hierbei kann das Raumgewicht des Schaumstoffs nach der zweiten Tränkung auf 150 kg/m³ ansteigen.

Das Doppeltränkungsverfahren ist entweder mit dem Tränkbad von Beispiel 1 oder dem Tränkbad von Beispiel 2 oder auch wechselweise mit beiden Tränkbädern möglich.

Das Tränkbad nach Beispiel 2 ist auf eine Tränkung ausgerichtet, die einen Flammschutz schon bei tieferen Temperaturen bietet. Die Zersetzungstemperatur von Pentabromtoluol liegt bei 280° C, so daß sich die Möglichkeit ergibt, zu solchen Substanzen überzugehen, die in der Zersetzungstemperatur niedriger liegen. Überraschenderweise wurde gefunden, daß besonders günstige Effekte erzielt werden bei Verwendung von (1,2,5,6,9,10)-Hexabromcyclododecan. Dieses Mittel zersetzt sich bereits bei 170° C und läßt eine Schnellöschwirkung zusammen mit feinkörnigem Aluminiumtrihydrat und Antimontrioxyd erzielen.

Als Bromverbindungen sind auch Gemische von bromierten Diphenyläthern und/oder von bromierten Diphenylen, wie Nonabromdiphenyl, anwendbar.

Als Schwefel-Verbindungen kommen Verbindungen von bzw. mit Sulfon- und/oder Sulfoniumzwitterionen, und zwar insbesondere Ammoniumsalze und verwandte Verbindungen folgender Sulfonsäuren in Betracht, die optimale Ergebnisse in Verbindung mit dem Acrylat-Tränkbad ergeben: Amino-, Amido-, Imido-, 2-Chlor-4-toluidin- und 2-Chlor-4-toluidin-5-sulfonsäure, Diphenylsulfonsäure. Auch Nitraminsäure SF (3-Amino-2-hydroxy-5-nitrobenzolsulfonsäure) ist zweckmäßig.

Weitere Beispiele sind Diphenylsulfon und Di(4-hydroxy)phenylsulfon und bei Verwendung von Epoxidharz vor allem Diaminophenylsulfon.

So wurde gefunden, daß ein erheblicher Fortschritt erreicht wird, wenn als Schaumstoffe nur Polyätherschäume und als brandlöschendes bzw. flammwidriges Material im wesentlichen nur Aluminiumtrihydrat zusammen mit einem Ammonsalz einer Aminosulfonsäure verwendet werden. Hierbei ergibt sich überraschenderweise eine gute Kombinationswirkung und wurde festgestellt, daß keinerlei Nachglimmen mehr vorhanden ist und alle mechanischen Anforderungen nach der Tränkung erhalten bleiben.

Beispiel 3

| | | |
|---|---|---|
| 1. | Acronal® 810 | 15% |
| 2. | Wasser | 30,2% |
| 3. | Martinal® ON 313 | 38% |
| 4. | Feliderm® K | 12% |
| 5. | Titandioxyd | 3% |
| 6. | Baysilon® | 0,4% |
| 7. | Helio-echt® | 0,4% |

Acronal® 810 ist ein Polyacrylsäureester der BASF. Martinal® ON 313 ist ein Aluminiumtrihydrat der Martinswerke, Köln. Feliderm® K ist ein Ammonsalz der Aminosulfonsäure der Hoechst AG.

Die einzelnen Bestandteile können in ihrem Prozentsatz variieren, z. B.

| | |
|---|---|
| Martinal® zwischen | 30—50% |
| Feliderm® zwischen | 7,5—15% |
| Acronal® 810 zwischen | 10—20%. |

Anstelle von Feliderm® K kann auch Feliderm® DR, d. h. ein Ammoniumsalz der Amino-imidosulfonsäure, verwendet werden.

Das Tränkbad wird so eingestellt, daß folgende Werte eingehalten werden:

| | |
|---|---|
| Viskosität: | 650 mPa/sec |
| Feststoffgehalt: | 62% |
| pH-Wert: | 7—8 |
| spez. Gew.: | 1,45 |

Bis auf den pH-Wert sind Abweichungen der Werte nach Prüfung der Schaumstruktur bis zu ±10% zulässig.

Es wurden folgende Eigenschaften am getrockneten Schaum festgestellt:

| | |
|---|---|
| Zugfestigkeit nach DIN 53571 | 131 kPa |
| Bruchdehnung nach DIN 53571 | 196% |
| Stauchhärte nach DIN 53577 | |
| unter 40% Verformung | 3,3 kPa |

Die Güte des brandgeschützten Schaumes erreicht nach DIN 4102 die Klasse B1 und sogar noch besser.

Zusammenfassend ist daher festzustellen, daß die Tränkungssubstanz nach Beispiel 2 bereits bei tieferen Temperaturen als das Brand- bzw. Flammschutzmittel gemäß dem Tränkbad von Beispiel 1 zur Wirkung gelangt und daß das Beispiel 3 zu den besten Ergebnissen vor allem auch hinsichtlich der Beseitigung der Nachglimmgefahr führt.

Je nach dem Anwendungsfall kann es erwünscht sein, unterschiedliche bromhaltige Substanzen zu verwenden, um abgestufte, d. h. in verschiedenen Temperaturbereichen einen guten Flammschutz zu erzielen. Dabei empfiehlt es sich insbesondere zum Verhüten von Flächenbränden durch Glimmen bzw. Nachglimmen, wenn das Brand- bzw. Flammschutzmittel auch Stickstoff und/oder phosphorhaltige Bestandteile aufweist, die sich insbesondere bei solchen Temperaturen zersetzen, bei denen auch die Bromverbindungen zum Zersetzen neigen.

Besonders bewährt haben sich in diesem Zusammenhang Guanidine, wie Benzoguanidinharz, Melaminborat, Dimelaminpyrophosphat des sekundären Guanidinphosphats, Guanylharnstoff und sonstige wasserlösliche Ammoniumverbindungen. Die beste Wirkung wird dann erreicht, wenn 10—20% der phosphor- bbzw. stickstoffhaltigen Substanzen dem Tränkbad der Beispiele 1 bis 3 hinzugegeben werden.

Die in der Beschreibung, insbesondere in den Beispielen genannten Zahlenwerte sind im wesentlichen Mittelwerte; wird von diesen abgewichen, so sind dennoch günstige Eigenschaften zu erwarten.

Die Brandschutzwerte entsprechen DIN 4102, Teil 1, mindestens Klasse B1. Im Brandschachtofen wurden Brandschutzwerte erreicht, die erheblich die Werte solcher auf dem Markt befindlicher Schaumstoffe übertreffen, die gute Brand- bzw. Flammschutzeigenschaften haben. Dabei ergeben sich Restlängen, die über 150 mm hinausgehen.

Besonders bevorzugt wird die Erfindung angewendet bei Schaumstoffeinlagen, die insbesondere für Sitze und Matratzen verwendet sind. Dies ist vor allem in Eisenbahnen, Straßenbahnen, U-Bahnen, Omnibussen, Kraftfahrzeugen und Flugzeugen wichtig, wo verhindert werden soll, daß sich Brände schnell ausbreiten.

Darüber hinaus ist die Erfindung gut anwendbar bei solchen Schaumstoffen, die zur Wärme- und/oder Schalldämmung in Form von Dämmschichten, insbesondere als Platten aber auch als Rohre, Bandagen oder dergleichen verwendet werden. So können Wände und Decken von Gebäuden, insbesondere Holzbauten und Notunterkünften, aber auch Fahrzeuge mit Schaumstoffschichten bzw. Schaumstoffplatten ausgerüstet oder verkleidet werden, die mit dem erfindungsgemäßen Brand- bzw- Flammschutzmittel getränkt sind.

Ausführungsbeispiele sind im folgenden anhand der Zeichnung erläutert. Darin zeigt

Fig. 1 einen schematischen Querschnitt durch eine aus Schaumstoff bestehende Bauplatte,

Fig. 2 einen schematischen Querschnitt durch eine unter Verwendung von Schaumstoff hergestellte Polsterung, beispielsweise des Armaturenbrettes eines Kraftfahrzeuges,

Fig. 3 einen schematischen Querschnitt durch einen mit Schaumstoffeinlagen versehenen Sitz,

Fig. 4 einen schematischen Querschnitt durch eine aus zwei Teilen zusammengesetzte Schaumstoff-Rohrummantelung,

Fig. 5 einen vergrößerten schematischen Teilschnitt durch die Struktur des mindestens teilweise offenzelligen Schaumstoffes, und

Fig. 6 einen schematischen Querschnitt durch einen Verbundbauteil aus einer Schaumstoffschicht und einer Deckschicht.

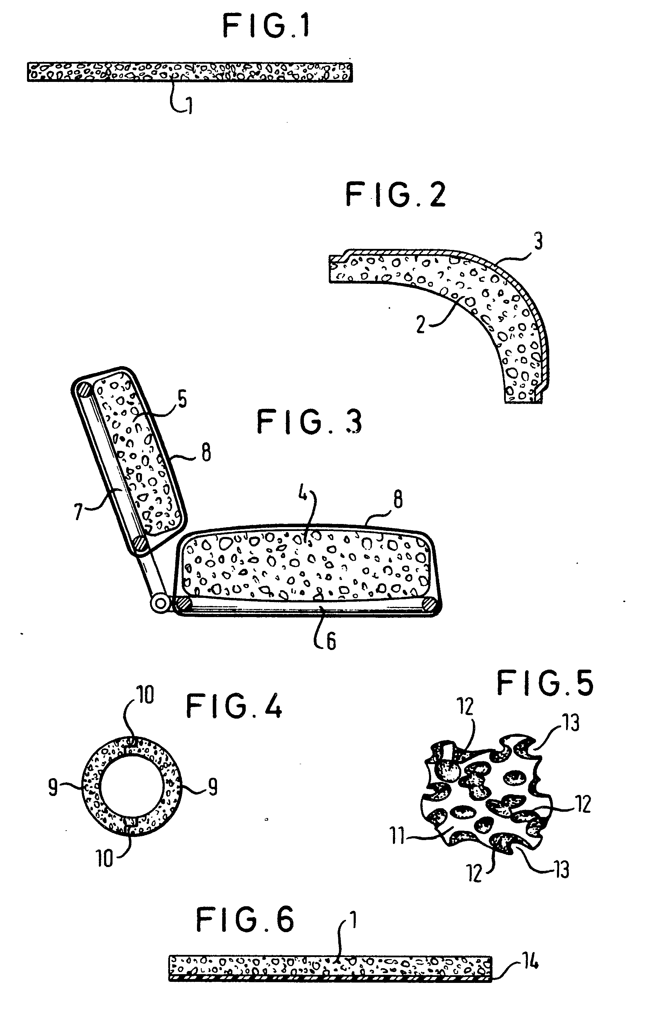

Die Bauplatte 1 gemäß Fig. 1 besteht aus offenzelligen Polyurethan-Schaum auf Polyätherbasis, der lediglich durch offenzellige Punktierung angedeutet ist. Solche Bauplatten dienen vor allem zum wärme- bzw. kältedämmenden und/oder schalldämmenden Verkleiden von Außen- oder Trennwänden in Gebäuden, können jedoch auch selbst als solche Wände verwendet werden.

Gemäß Fig. 2 ist eine aus Schaumstoff bestehende Armaturenpolsterung 2 im Querschnitt schematisch dargestellt, die an der Außenseite mit einem der Innenraumauskleidung eines Kraftfahrzeugs entsprechenden Überzug 3 aus beispielsweise einer genarbten Kunststoffschicht überzogen ist. Das eigentliche Schaumstoffelement besteht ebenfalls aus offenzelligem Polyurethan-(Polyäther)-Schaum.

Gemäß Fig. 3 sind zwei Schaumstoffeinlagen 4 und 5 auf einem lediglich schematisch dargestellten Sitz 6 und einer Lehne 7 gezeigt und von Spannbändern bzw. einem Abdeckstoff 8 abgedeckt. Auch hier bestehen die Schaumstoffeinlagen aus vorwiegend offenzelligem Schaum.

Gemäß Fig. 4 bestehen zwei halbkreisförmige Halbschalen 9 aus Schaumstoff offenzelliger Art. Mit solchen Schaumstoffschalen 9 können Rohrleitungen umgeben und gegen Kälte oder Wärme sowie gegen Abschallung umgeben werden. Beide Halbschalen 9 sind mit Nuten 10 versehen, so daß sie sich zu einem Rohr ergänzend zusammenstecken lassen.

Gemäß Fig. 5 ist die offenzellige Schaumstoffstruktur 11 der in den Fig. 1 bis 4 gezeigten Elemente 1, 2, 4, 5, 9 so ausgebildet, daß die Zellen 13 und Verbindungskanäle der aus Polyurethan (mit Polyätherbasis) bestehenden porösen Struktur 11 mit dem nach Trocknung des Tränkmittels verbleibenden Überzug 12 überzogen sind. Dieses stellt den erwünschten Brandschutz bzw. Nachglimmschutz sicher. Dabei empfiehlt es sich, wenn dieses als Brand- bzw. Flammschutzmittel dienende Überzugsmaterial sich bei Temperaturen zwischen 100 und 350° C zersetzt. Um ein breites Spektrum solcher Zersetzungseffekte zu erzielen, ist der in der Zeichnung lediglich angedeutete Überzug 12 (entstanden aus dem Tränkungsmittel nach Trocknung desselben) mehrschichtig aufgebracht. Dabei ist das Material der Einzelschichten des Überzugs 12 so ausgewählt, daß sich die Materialien unterschiedlicher Schichten bei unterschiedlichen Temperaturen zersetzen.

Gemäß Fig. 6 ist die etwa 50 mm dicke Bauplatte 1 aus dem mit dem Flammschutzmittel durchtränkten Plyurethan-(Polyäther)-Schaum an einer Seite mit einer etwa 2 mm dicken Deckschicht 14 überzogen, bei der das Bindemittel für die flammhemmenden und Gase, insbesondere Wasserdampf, bei hohen Temperaturen entwickelnden Bestandteile aus einer wäßrigen Epoxidharzemulsion unter Verwendung hydrophiler und mit Wasser emulgierbarer Epoxidharze sowie insbesondere Aminhärter gebildet ist.

## Patentansprüche

1. Zur Behandlung von entflammbaren Gegenständen dienendes Flammschutzmittel als Tränkmittel, bestehend aus in einem organischen Bindemittel gebundenem Aluminiumtrihydrat mit einem Anteil von bis zu etwa 50% und einer Schwefelverbindung sowie gegebenenfalls einer Bromverbindung, dadurch gekennzeichnet, daß als Schwefelverbindung eine flammschutzverbessernde Verbindung, die mindestens eine Sulfogruppe und/oder Sulfoniumionen aufweist, mit Ausnahme von Alkylsulfonaten, in einem Anteil zwischen 7,5 und 30% verwendet ist.

2. Flammschutzmittel nach Anspruch 1, dadurch gekennzeichnet, daß eine wasserlösliche Ammoniumverbindung in einem Anteil zwischen 5 und 20% vorhanden ist.

3. Flammschutzmittel nach Anspruch 1 oder 2, dadurch gekennzeichnet, daß als Schwefelverbindung und als Ammoniumverbindung ein Ammoniumsalz einer Sulfonsäure in einem Anteil in der Größenordnung von 12% verwendet ist.

4. Flammschutzmittel nach einem der vorhergehenden Ansprüche, dadurch gekennzeichnet, daß die Sulfonsäure eine der folgenden ist:

Aminosulfonsäure
Amidosulfonsäure
Imidosulfonsäure
2-Chlor-4-toluidinsulfonsäure
Diphenylsulfonsäure

5. Flammschutzmittel nach einem der vorhergehenden Ansprüche, gekennzeichnet durch die Verwendung einer wäßrigen Lösung und/oder Dispersion eines organischen Bindemittels.

6. Flammschutzmittel nach Anspruch 5, gekennzeichnet durch einen Anteil von 12 bis 22% eines Polymerisats oder Copolymerisats auf der Basis von Acrylsäureester als organisches Bindemittel.

7. Flammschutzmittel nach einem der vorhergehenden Ansprüche, gekennzeichnet durch folgende Tränkmittel-Dispersion:

| | |
|---|---|
| 29—50% | Aluminiumtrihydrat |
| 27—32% | Wasser |
| 10—22% | Acrylsäureester-Polymerisat oder -Copolymerisat |
| 7,5—15% | Ammoniumsalz der Aminosulfonsäure |
| bis zu 11% | Antimontrioxyd |
| bis zu 5% | Titandioxyd |
| bis zu 0,5% | Entschäumungsmittel |
| bis zu 0,5% | Pigmente. |

8. Schwerentflammbarer Polyurethanschaum auf Polyätherbasis, bei dem der Schaumstoff mit einem Raumgewicht zwischen etwa 10 und 50 kg/m$^3$ im wesentlichen offenzellig ausgebildet und mit einem Flammschutzmittel getränkt ist, das in einem organischen Bindemittel gebundenes Aluminiumtrihydrat mit einem Anteil von bis zu etwa 50% und eine Schwefelverbindung aufweist, dadurch gekennzeichnet, daß der die Zellwände der offenen Zellen (13) der porösen Schaumstruktur (11) bedeckende Überzug (12) eine Sulfoverbindung mit Ausnahme von Alkylsulfonaten in einem Anteil zwischen 7,5 und 30% des Überzugs (12) in dessen fließfähigem Tränkmittelzustand vor dem Aufbringen aufweist.

9. Polyurethanschaum nach Anspruch 8, dadurch gekennzeichnet, daß der Überzug (12) ein Ammoniumsalz einer der folgenden Sulfonsäuren aufweist: Aminosulfonsäure, Amidosulfonsäure, Imidosulfonsäure, 2-Chlor-4-toluidinsulfonsäure, Diphenylsulfonsäure.

10. Polyurethanschaum nach Anspruch 8 oder 9, dadurch gekennzeichnet, daß der Überzug (12) einen Anteil von 12 bis 22% (bezogen auf das Gewicht des Flammschutzmittels in dessen fließfähigem Tränkmittelzustand vor dem Aufbringen) eines Polymeren oder Copolymeren auf der Basis von Acrylsäureester aufweist.

11. Polyurethanschaum nach einem der Ansprüche 8 bis 10, gekennzeichnet durch die Kombination mit einer Deckschicht (14), die aus einer wäßrigen Epoxydharzemulsion folgender Ausgangszusammensetzung auf der Schaumstruktur (11) aufgetragen ist:
Wäßrige Epoxidharzemulsion bestehend aus in Wasser emulgierbarem, hydrophilem Epoxidharz mit einem Härter auf der Basis von Polyaminen, Polycarbonsäureanhydrid, Polyamidoaminen und/oder Dicyandiamid,
sowie mit endotherm reagierenden, schaumbildenden, gasabgebenden und/oder kettenabbrechenden Zusätzen und/oder Füllstoffen.

12. Verfahren zur Herstellung eines schwerentflammbaren Polyätherschaumstoffs nach einem der vorhergehenden Ansprüche, bei dem der Schaumstoff mit einem Flammschutzmittel getränkt und anschließend getrocknet wird, dadurch gekennzeichnet, daß der Schaumstoff so stark mit dem Flammschutzmittel getränkt wird, daß das Raumgewicht des Schaumstoffes nach dem Trocknen mindestens 500% des ursprünglichen Raumgewichtes vor dem Tränken aufweist.

13. Verfahren nach Anspruch 12, dadurch gekennzeichnet, daß der Schaumstoff in einem Zweistufenverfahren doppelt getränkt wird.

14. Verfahren nach Anspruch 12 oder 13, dadurch gekennzeichnet, daß der Schaumstoff nach dem Tränken im Hochfrequenzverfahren durch Mikrowellen getrocknet wird.

**Claims**

1. Flame retardant composition as impregnating agent, serving for the treatment of flammable articles, comprising aluminium trihydrate in the proportion of up to approximately 50% combined in an organic binding agent, and a sulphur compound, and also possibly a bromine compound, characterised in that a compound which improves flame retardance and which has at least one sulpho group and/or sulphonium ions, with the exception of alkyl sulphonates, is used as the sulphur compound, in a proportion of between 7.5 and 30%.

2. Flame retardant composition according to claim 1, characterised in that a water-soluble ammonium compound is present in a proportion of between 5% and 20%.

3. Flame retardant composition according to claim 1 or 2, characterised in that an ammonium salt of a sulphonic acid is used as sulphur compound and as ammonium compound, in a proportion of the order of magnitude of 12%.

4. Flame retardant composition according to one of the preceding claims, characterised in that the sulphonic acid is one of the following:

aminosulphonic acid
amidosulphonic acid
imidosulphonic acid
2-chloro-4-toluidine sulphonic acid
diphenyl sulphonic acid.

5. Flame retardant composition according to one of the preceding claims, characterised by the use of an aqueous solution and/or dispersion of an organic binding agent.

6. Flame retardant composition according to claim 5, characterised by a content of 12 to 22% of a polymer or copolymer having a base of acrylic acid ester as organic binding agent.

7. Flame retardant composition according to one of the preceding claims, characterised by the following impregnating agent dispersion:

| | |
|---|---|
| 29—50% | aluminium trihydrate |
| 27—32% | water |
| 10—22% | acrylic acid ester polymer or copolymer |
| 7.5—15% | ammonium salt of aminosulphonic acid |
| up to 11% | antimony trioxide |
| up to 5% | titanium dioxide |
| up to 0.5% | defoaming agent |
| up to 0.5% | pigments. |

8. Difficultly flammable polyurethane foam having a polyether base, the foam material being of substantially open-cell construction with a volume weight of between approximately 10 and 50 kg/m$^3$ and being impregnated with a flame retardant composition which comprises a content of up to approximately 50% of aluminium trihydrate combined in an organic binding agent, and also a sulphur compound, characterised in that the coating (12) covering the walls of the open cells (13) of the porous foam structure (11) comprises a sulpho compound with the exception of alkyl sulphonates, in a proportion of between 7,5% and 30% of the coating in the fluid impregnating agent state of same before application.

9. Polyurethane foam according to claim 8, characterised in that the coating (12) has an ammonium salt of one of the following sulphonic acids : aminosulphonic acid, amidosulphonic acid, imidosulphonic acid, 2-chloro-4-toluidine sulphonic acid, diphenyl sulphonic acid.

10. Polyurethane foam according to claim 8 or 9, characterised in that the coating has a content of 12 to 22% (relatively to the weight of the flame retardant composition in its fluid impregnating agent state before application) of a polymer or copolymer having a base of acrylic acidester.

11. Polyurethane foam according to one of claims 8 to 10, characterised by the combination with a covering layer (14) which is applied to the foam structure (11) from an aqueous epoxy resin emulsion of the following initial composition:
aqueous epoxy resin emulsion comprising hydrophilic epoxy resin emulsifiable in water and with a hardener having a base of polyamines, polycarboxylic acid anhydride, polyamidoamines and/or dicyano diamide,
also with endothermally reacting, foam-forming, gas-producing and/or chain-breaking additives and/or fillers.

12. Process for the production of a difficultly flammable polyether foam according to one of the preceding claims, the foam being impregnated with a flame retardant composition and then dried, characterised in that the foam is so strongly impregnated with the flame retardant composition that the volume weight of the foam after drying amounts to at least 500% of the original volume weight before the impregnation.

13. Process according to claim 12, characterised in that the foam is double impregnated in a two stage process.

14. Process according to claim 12 or 13, characterised in that after the impregnation the foam is dried with a highfrequency process by means of microwaves.


## Revendications

1. Agent retardant les flammes servant pour le traitement de structures inflammables et agissant comme agent d'imprégnation, composé de trihydrate d'aluminium combiné dans un liant organique en une proportion allant jusqu'à environ 50% et d'un composé de soufre ainsi qu'éventuellement d'un composé de brome, caractérisé en ce qu'on emploie comme composé de soufre un composé améliorant la protection contre les flammes qui présente au moins un groupe sulfonique et/ou des ions de sulfonium à l'exclusion de sulfonates d'alkyles dans une proportion entre 7,5 et 30%.

2. Agent retardant les flammes selon la revendication 1, caractérisé en ce qu'il comprend un composé d'ammonium soluble dans l'eau dans une proportion entre 5 et 20%.

3. Agent retardant les flammes selon l'une des revendication 1 ou la revendication 2, caractérisé en ce qu'on utilise comme composé du soufre et comme composé d'ammonium un sel d'ammonium d'un acide sulfonique dans une proportion de l'ordre de grandeur de 12%.

4. Agent retardant les flammes selon l'une des revendications précédent, caractérisé en ce que l'acide sulfonique est l'un des acides suivants:

    acide aminosulfonique
    acide amidosulfonique
    acide imidosulfonique
    acide chloro-2-toluidine-4 sulfonique
    acide diphénylsulfonique

5. Agent retardant les flammes selon l'une des revendications précédentes, caractérisé par l'utilisation d'une solution et/ou d'une dispersion aqueuse d'un liant organique.

6. Agent retardant les flammes selon la revendication 5, caractérisé par une proportion de 12 à 22% d'un polymérisat ou copolymérisat à base d'ester acrylique comme liant organique.

7. Agent retardant les flammes selon l'une des revendications précédentes, caractérisé par la dispersion suivante d'agent d'imprégnation:

    29—50%      de trihydrate d'aluminium
    27—32%      d'eau
    10—22%      de polymérisat ou copolymérisat d'ester d'acide acrylique
    7,5—15%     de sel d'ammonium de l'acide aminosulfonique
    jusqu'à 11% de trioxyde d'antimoine
    jusqu'à 5%  de dioxyde de titane
    jusqu'à 0,5% d'agent anti-mousse
    jusqu'à 0,5  de pigments

8. Mousse de polyuréthane difficilement enflammable à base de polyéther, dans laquelle le corps en mousse d'un poids spécifique entre 10 et 50 kg/m$^3$ est étably essentiellement à cellules ouvertes et est imprégné d'un agent retardant les flammes, qui contient du trihydrate d'aluminium combiné dans un liant organique en une proportion allant jusqu'à environ 50% et un composé de soufre, caractérisé en ce que le revêtement (12) recouvrant les parois des cellules ouvertes (13) de la structure de mousse spongieuse (11) contient un composé sulfonique à l'exclusion de sulfonates d'alkyles dans une proportion entre 7,5 et 30% du revêtement (12) dans son état fluide d'imprégnation avant son application.

9. Mousse de polyuréthane selon la revendication 8, caractérisé en ce que le revêtement (12) contient un sel d'ammonium de l'un des acides sulfoniques suivants : acide aminosulfonique, acide amidosulfonique, acide imidosulfonique, acide chloro-2 toluidine-4 sulfonique, acide diphénylsulfonique.

10. Mousse de polyuréthane selon la revendication 8 ou la revendication 9, caractérisé en ce que le revêtement (12) contient une proportion de 12 à 22% (par rapport au poids de l'agent retardant les flammes à son état fluide d'agent d'imprégnation avant l'application) d'un polymère ou copolymère à base d'ester d'acide acrylique.

11. Mousse de polyuréthane selon l'une des revendications 8 à 10, caractérisé par la combinaison avec une couche de revêtement (14) qui est appliquée sur la structure en mousse (11) en provenant d'une émulsion aqueuse de résine époxyde de composition suivante:
émulsion aqueuse de résine époxyde composée de résine époxyde hydrophile émulsifiable dans l'eau avec un durcissant à base de polyamines, d'anhydride de polyacide carbonique, de polyamidoamines et/ou de dicyandiamide
ainsi qu'avec des additions et/ou des corps de remplissage à réaction endothermique générateurs de mousse, dégageant des gaz et/ou rompant des chînes.

12. Procédé pour la fabrication d'une mousse de polyéther difficilement inflammable selon l'une des revendications précédentes, dans lequel le corps en mousse est imprégné d'un agent retardant les flammes et est ensuite séché, caractérisé en ce que le corps en mousse est assez imprégné, d'agent retardant les flammes pour que le poids spécifique du corps en mousse après séchage soit au moins 500% du poids spécifique primitif avant imprégnation.

13. Procédé selon la revendication 12, caractérisé en ce que le corps en mousse est imprégné doublement dans un procédé en deux stades.

14. Procédé selon la revendication 12 ou la revendication 13, caractérisé en ce que le corps en mousse est séché après imprégnation par un procédé de chauffage à haute fréquence par micro-ondes.

11

# FIG.1

# FIG.2

# FIG.3

# FIG.4

# FIG.5

# FIG.6